# EUROPEAN PATENT SPECIFICATION

(11) **EP 4 366 963 B1**
(45) Date of publication and mention of the grant of the patent: **11.11.2026**
(21) Application number: 22734620.2
(22) Date of filing: 23.06.2022
(51) Int. Cl.: B60H 1/00, B60H 1/03, F24F 12/00

(54) **VENTILATION UNIT AND RECREATIONAL VEHICLE WITH SAID VENTILATION UNIT**
LÜFTUNGSEINHEIT UND FREIZEITFAHRZEUG MIT DER LÜFTUNGSEINHEIT
UNITÉ DE VENTILATION ET VÉHICULE RÉCRÉATIF DOTÉ DE LADITE UNITÉ DE VENTILATION

(30) Priority: 30.07.2021 DE 102021208289
(43) Date of publication of application: 15.05.2024
(73) Proprietor: Dometic Sweden AB, 171 54 Solna (SE)
(72) Inventor: KRIST, Sergej, 57290 Neunkirchen (DE); HOMMERICH, Tobias, 57080 Siegen (DE); GLIEDEN, Torsten, 57078 Siegen (DE); DIETRICH, Marcus, 57250 Netphen (DE)
(74) Representative: Grosse, Felix Christopher
(86) International application number: PCT/EP2022/067107
(87) International publication number: WO 2023/006307

(56) References cited:
- WO-A1-2018/162016
- DE-U1- 20 313 136
- US-A- 4 513 809
- US-A- 4 825 936

## Description

This invention relates to a ventilation unit and a recreational vehicle with such a ventilation unit.

In general, confined spaces in which persons are expected to spend their time, have to be provided with ventilation units to ensure an appropriate supply with fresh air for the persons withing the confined space.

This holds in particular for relatively limited confined spaces as it is the case for example in recreational vehicles like campers, caravans or mobile homes. It has been observed that during ventilation processes with common ventilation units, undesired temperature variations within the confined space can occur due to a temperature difference between the intake air from the environment and the exhaust air from the confined space.

US 4 825 936 A discloses an exemplary rotary heat generator assembly comprising an enclosure, a regenerator matrix disposed therein and secured to a rotatable shaft, and two blowers, each forcing air through a portion of a regenerator wheel. Further, DE 203 13 136 U1, WO 2018 / 162 016 A1 and US 4 513 809 A each disclose an exemplary ventilation unit comprising an air to air heat exchanger for heat recovery.

In view of this problem, it is the scope of the present invention to provide a ventilation unit allowing ventilation processes with considerably decreased temperature variations within the confined space during ventilation processes.

This scope is achieved by the ventilation unit according to claim 1. Preferable modifications thereof are presented in the dependent claims.

According to a first aspect of the present invention, a ventilation unit, in particular for recreational vehicles like campers, caravans or mobile homes, comprises an air intake arrangement and an air exhaust arrangement. The air intake arrangement is configured to define an intake air flow path from the environment of a confined space into the confined space in an installed state of the ventilation unit. The air exhaust arrangement is configured to define an exhaust air flow path from the confined space to the environment of the confined space in the installed state of the ventilation unit. The ventilation unit further comprises a passive heat transfer unit configured to conduct a passive heat transfer between intake air within the intake air flow path and exhaust air within the exhaust air flow path. A separation wall separates the intake air flow path and the exhaust air flow path within an internal housing defining a temperature exchange room within the ventilation unit from each other. The passive heat transfer unit comprises a flat heat transfer disc as well as a rotation motor. The rotation motor is coupled to the heat transfer disc in such a manner that the rotation motor is configured to rotate the heat transfer disc. The heat transfer disc is configured such that a first section of the heat transfer disc is in contact with the exhaust air flow path side of the temperature exchange room within the internal housing and a second section of the heat transfer disc is in contact with the intake air flow path side of the temperature exchange room within the internal housing so that the first section is in contact with exhaust air flowing through the exhaust air flow path and the second section is in contact with intake air flowing through the intake air flow path. The heat transfer disc is a perforated ceramic disc. The rotation motor is positioned within a space which is built in the separation wall.

Via the passive heat transfer, the intake air from the environment of the confined space is cooled or heated passively via the exhaust air within the exhaust air flow path such that the temperature of the intake air flow is changed towards the temperature of the exhaust air reducing temperature variations resulting from the ventilation process. According to the present invention, this is achieved without the need of complex and in many times expensive air conditioning arrangements like cooling circuits or similar.

Preferably, the air intake arrangement comprises an intake fan unit being provided on the internal housing and configured to force a flow of intake air through the intake air flow path. In addition or alternatively, the air exhaust arrangement comprises an exhaust fan unit being provided on the internal housing and configured to force a flow of exhaust air through the exhaust air flow path. This configuration allows to increase the amount of air replaced within the confined space by the ventilation unit.

Preferably, the intake fan unit and/ or the exhaust fan unit comprise(s) a fan driven by an electric motor with control input. In particular, said electric motor is a 12 Volt DC motor operated by pulse width modulated operation signals. In addition or alternatively, the rotation motor is a 12 Volt DC motor operated by pulse width modulated operation signals. Such motors allow the implementation of highly controllable, reliable and quite inexpensive overall configurations.

Preferably, the ventilation unit comprises a control unit. The control unit has a printed circuit board. The control unit is configured to control the operation of the intake fan unit, of the exhaust fan unit and/or of the heat transfer unit. In particular, the control unit is configured to control the electric motors of the fan units and/or the rotation motor of the heat transfer unit. Such a control unit allows a central and highly specific control of the operation of the various components of the ventilation unit

Preferably, the control unit is configured to receive and to process signals from a gas sensor, in particular from a carbon dioxide sensor (CO2 sensor) and/or a volatile organic compounds sensor, measuring the air quality within the confined space. Furthermore, the control unit is configured to control components of the ventilation unit based on these signals. Such a configuration allows an automated control of the various components of the ventilation unit.

Preferably, the control unit is configured to receive and to process signals from a differential pressure sensor. The control unit is further configured to control components of the ventilation unit to provide a predetermined over-pressurization within the confined space with respect to the environment. Thus, it is possible to set and to keep a predetermined over-pressure within the confined space as compared to the environment as it is desired in general.

Preferably, the ventilation unit comprises a housing surrounding various components of the ventilation unit. The housing is coupled to a base of the ventilation unit, while the base is configured to attach the ventilation unit to a desired location. In particular, the housing is made of fiber reinforced material, preferably of hemp fiber reinforced polypropylene. Such a housing ensures the protection of the various components of the ventilation unit while being lightweight at the same time, thus adding only little weight to the overall configuration.

Preferably, the ventilation unit comprises sealing members and/or filtering units. The sealing members are configured to seal various components of the ventilation unit against fluid ingress. The filtering units are configured to filter in particular intake air within the intake air flow path. Such a configuration allows to protect the ventilation unit itself as well as the confined space against pollution from the environment of the confined space.

According to another aspect of the present invention, a recreational vehicle, in particular a camper, caravan or mobile home, comprises at least one of the above described ventilation units.

Thus, it is possible to take advantage of the above described technical effects achieved with the ventilation units in a recreational vehicle.

These and other features of the invention will become more apparent from the following detailed description of a preferred, non-limiting exemplary embodiment of the present invention, with reference to the accompanying drawings, in which:
- FIG. 1: is a spatial view of a ventilation unit according to one exemplary embodiment of the present invention in an installed state of the ventilation unit;
- FIG. 2: is a further spatial view of the ventilation unit of FIG. 1;
- FIG. 3: is a cross-sectional view of the ventilation unit of FIGS. 1 and 2;
- FIG. 4: is a spatial partial view the ventilation unit of FIGS. 1 to 3;
- FIG. 5: is a further spatial partial view of the ventilation unit of FIGS. 1 to 3.

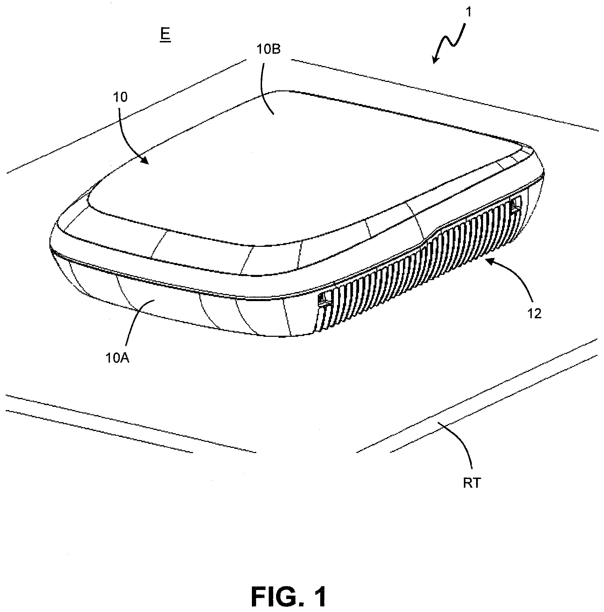

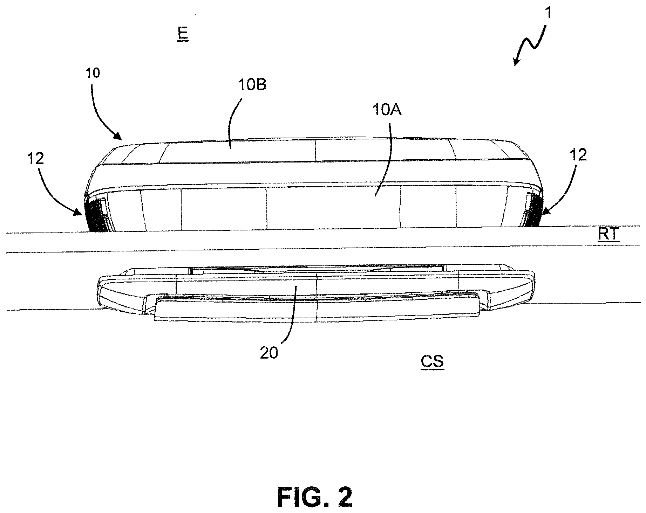

With reference to the accompanying drawings, a ventilation unit 1 comprises a housing 10. The housing 10 is coupled to a base 20 (see FIG. 2). The base 20 is configured to be coupled to a desired location of the rooftop RT of a recreational vehicle, like it is illustrated in FIG. 1.

The housing 10 comprises a housing frame 10A and a housing cover 10B. The housing frame 10A comprises ventilation openings 12 provided on two opposing sides of the ventilation unit 1, as it is for example shown in FIG. 2.

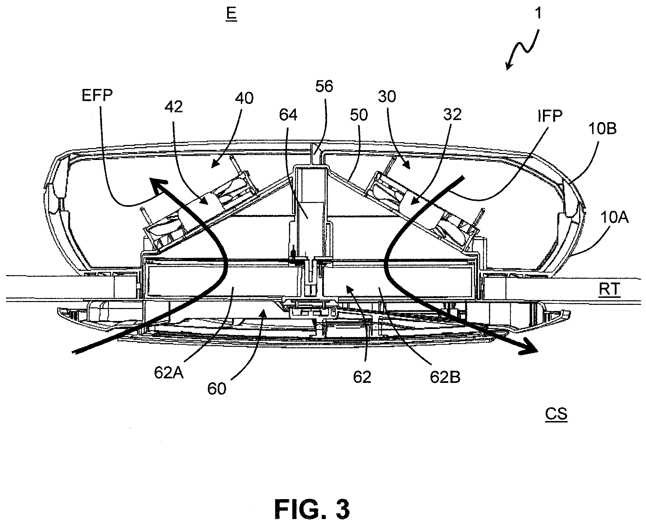

As it is best seen in FIG. 3, the ventilation unit 1 comprises an air intake arrangement 30 as well as an air exhaust arrangement 40. The air intake arrangement 30 defines an intake air flow path IFP. The air exhaust arrangement 40 defines an exhaust air flow path EFP. In a state in which the ventilation unit 1 is installed in a roof top RT, as it is illustrated in FIG. 2, the intake air flow path IFP is provided from the environment E of a confined space CS (for example, the inside of a recreational vehicle) into the confined space CS, and the exhaust air flow path EFP is provided from the confined space CS below the rooftop RT to the environment R of the confined space CS.

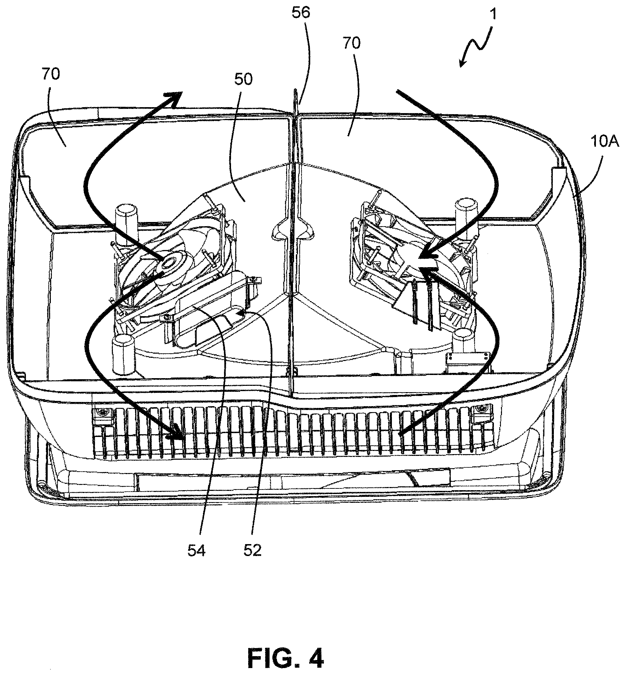

In the illustrated embodiment, the air intake arrangement 30 comprises an intake fan unit 32. The intake fan unit 32 is configured to force a flow of intake air through the intake air flow path IFP. The air exhaust arrangement 40 comprises an exhaust fan unit 42, The exhaust fan 42 is configured to force a flow of exhaust air through the exhaust air flow path EFP. As can be seen in FIGS. 3 and 4, the two fan units 32 and 42 are positioned within the housing 10 and are both provided on an internal housing 50. The internal housing 50 defines a temperature exchange room within the ventilation unit 1. A power storage 52 in the form of a battery unit is coupled to the internal housing 50 as can be seen in FIG. 4. In the present case the power storage 52 is coupled to the internal housing with a clam 54, but any other suitable means are also possible.

A separation wall 56 separates the intake air flow path IFP and the exhaust air flow path EFP within the internal housing 50 from each other. The ventilation unit 1 further has a passive heat transfer unit 60 comprising a flat heat transfer disc 62 as well as a rotation motor 64. In the illustrated embodiment, the heat transfer disc 62 is a perforated ceramic disc. However, also other configurations are possible. The rotation motor 64 is positioned within a space which is built in the separation wall 56 and is coupled to the heat transfer disc 62 in such a manner that the rotation motor 64 is configured to rotate the heat transfer disc 62.

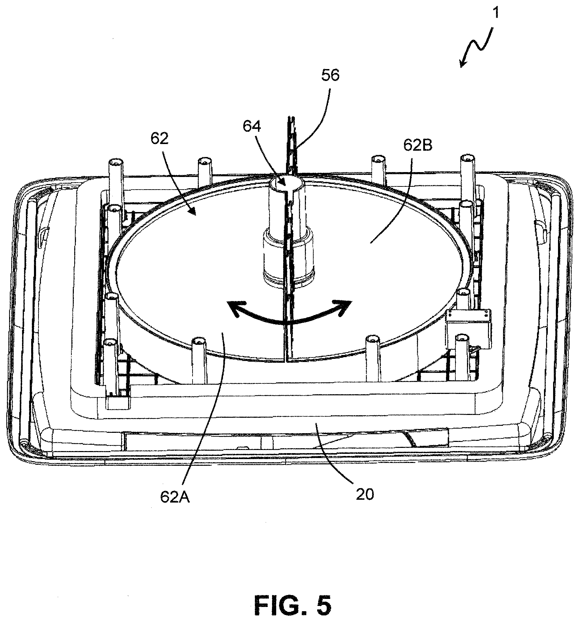

As it is illustrated in FIG. 5, the heat transfer disc 62 is configured such that a first section 62A of the heat transfer disc 62 is in contact with the exhaust air flow path side of the temperature exchange room within the internal housing 50 (on the left). A second section 62B of the heat transfer disc 62 is in contact with the intake air flow path side of the temperature exchange room within the internal housing 50 (on the right). Thus, the first section 62A is in contact with exhaust air flowing through the exhaust air flow path EFP and the second section 62B is in contact with intake air flowing through the intake air flow path IFP. During ventilation processes, the exhaust air flowing through the exhaust air flow path EFP heats or cools the first section 62A of the heat transfer disc 62 depending on the temperature of the exhaust air compared to the temperature of the first section 62A of the temperature transfer disc 62. Then the rotation motor 64 rotates the heated or cooled first section 62A of the heat transfer disc 62 from the exhaust air flow path EFP into the intake air flow path IFP. Thus, the respective section of the heat transfer disc 62 which is rotated into the intake air flow path IFP becomes the second section 62B of the heat transfer disc 62. Then the heated or cooled second section 62B of the heat transfer disc 62 heats or cools the intake air flowing through the intake air flow path IFP. This process occurs in a continuous manner such that heat is transferred permanently between the exhaust air within the exhaust air flow path EFP and the intake air within the intake air flow path IFP.

Each of the intake fan unit 32 and exhaust fan unit 42 comprises a fan. The fan of each fan unit 32, 42 is driven by an electric motor. In the illustrated embodiment, each of the electric motors of the fan units 32 and 42 as well as the rotation motor 64 of the heat transfer unit 60 are 12 Volt DC motors operated by pulse width modulated operation signals. The electric motors of the fan units 32 and 42 and the rotation motor 64 of the heat transfer unit 60 are coupled to the power storage 52 for power supply. The ventilation unit 1 further comprises a control unit (not illustrated explicitly) having a printed circuit board. The control unit is coupled to each of the two fan units 32 and 42 as well as to the transfer unit 60 and is configured to control the operation of these components of the ventilation unit 1. In particular, the control unit is configured to provide pulse width modulated operation signals to the electric motors of the two fan units 32 and 42 as well as to the rotation motor 64 of the heat transfer unit 60.

The control unit is further configured to be coupled to gas sensors, like a CO2 sensor and a volatile organic compounds sensor measuring the air quality within the confined space CS, as well as to differential pressure sensors measuring pressure difference between environment E of the confined space CS and the confined space CS itself. Based on the signals receives from said sensors processed in the control unit, the control unit controls various components of the ventilation unit 1 like the electric motors of the fan unit 32 and 42 or the rotation motor 64 of the heat transfer unit 60. For example, the control unit can be configured to increase the rotation speed for the fans of the fan units 32 and 42 when the air quality within the confined space CS determined by the gas sensors, falls below a predetermined value. At the same time, the control unit can set the respective rotation speeds for the fans of the fan units 32 and 42 in such a manner relative to each other that the temperature difference between the environment E of the confined space CS and the confined space CS itself is kept at a predetermined value. In particular, the confined space CS is kept at a predetermined over-pressure with respect to the environment E. Of course, the control unit can be configured such that also other sensors, like for example temperature sensors, humidity sensors, movement sensors or the like, can be coupled to the control unit to supplement and improve the functionality of the control unit.

As can be seen for example in FIG. 4, the ventilation unit 1 comprises various filtering units having filter pads 70 positioned, when seen from outside the ventilation unit 1, behind the ventilation openings 12 such that air passing through the ventilation unit 1 is filtered. Besides, the ventilation unit 1 comprises several sealing members configured to seal various components of the ventilation unit 1 against fluid ingress.

Finally, it is highlighted that the present invention not just refers to the illustrated and described ventilation unit 1, but the present invention refers also to recreational vehicles like campers, caravans or mobile homes being provided with at least one such ventilation unit 1.

The above described configurations are preferred but provide merely exemplary embodiments of the present invention. Hence, the described configurations of the present invention do not limit the achieved scope of protection as defined by the appended set of claims.

### REFERENCE SIGNS

- 1: heating apparatus
- 10: housing
- 10A: frame
- 10B: cover
- 12: ventilation openings
- 20: base
- 30: air intake arrangement
- 32: intake fan unit
- 40: air exhaust arrangement
- 42: exhaust fan unit
- 50: internal housing
- 52: power supply
- 54: clamp
- 56: separation wall
- 60: heat transfer unit
- 62: heat transfer disc
- 62A: first section of heat transfer disc
- 62B: second section of heat transfer disc
- 64: rotation motor
- 70: filter pads

- CS: confined space
- E: environment
- EFP: exhaust air flow path
- IFP: intake air flow path
- RT: roof top

## Claims

1. A ventilation unit (1), in particular for recreational vehicles like campers, caravans or mobile homes, the ventilation unit (1) comprising:
an air intake arrangement (30) configured to define an intake air flow path (IFP) from the environment (E) of a confined space (CS) into the confined space (CS) in an installed state of the ventilation unit (1);
an air exhaust arrangement (40) configured to define an exhaust air flow path (EFP) from the confined space (CS) to the environment (E) of the confined space (CS) in the installed state of the ventilation unit (1);
wherein the ventilation unit (1) comprises a passive heat transfer unit (60) configured to conduct a passive heat transfer between intake air within the intake air flow path (IFP) and exhaust air within the exhaust air flow path (EFP); wherein
a separation wall (56) separates the intake air flow path (IFP) and the exhaust air flow path (EFP) within an internal housing (50) defining a temperature exchange room within the ventilation unit (1) from each other; wherein the passive heat transfer unit (60) comprises a flat heat transfer disc (62) as well as a rotation motor (64); wherein the rotation motor (64) is coupled to the heat transfer disc (62) in such a manner that the rotation motor (64) is configured to rotate the heat transfer disc (62); and wherein
the heat transfer disc (62) is configured such that a first section (62A) of the heat transfer disc (62) is in contact with the exhaust air flow path side of the temperature exchange room within the internal housing (50) and a second section (62B) of the heat transfer disc (62) is in contact with the intake air flow path side of the temperature exchange room within the internal housing (50) so that the first section (62A) is in contact with exhaust air flowing through the exhaust air flow path (EFP) and the second section (62B) is in contact with intake air flowing through the intake air flow path (IFP)
**characterized in that**
the heat transfer disc (62) is a perforated ceramic disc; and
the rotation motor (64) is positioned within a space which is built in the separation wall (56).

2. The ventilation unit (1) according to claim 1, wherein
the air intake arrangement (30) comprises an intake fan unit (32) being provided on the internal housing (50) and configured to force a flow of intake air through the intake air flow path (IFP); and/or
the air exhaust arrangement (40) comprises an exhaust fan unit (42) being provided on the internal housing (50) and configured to force a flow of exhaust air through the exhaust air flow path (EFP).

3. The ventilation unit (1) according to claim 2, wherein
the intake fan unit (32) and/ or the exhaust fan unit (42) comprise(s) a fan driven by an electric motor with control input, in particular a 12 Volt DC motor operated by pulse width modulated operation signals; and/or wherein
the rotation motor (64) is a 12 Volt DC motor operated by pulse width modulated operation signals.

4. The ventilation unit (1) according to claim 2 or 3, wherein
the ventilation unit (1) comprises a control unit having a printed circuit board,
wherein the control unit is configured to control the operation of the intake fan unit (32), of the exhaust fan unit (42) and/or of the heat transfer unit (60).

5. The ventilation unit (1) according to claim 4, wherein
the control unit is configured to receive and to process signals from a gas sensor, in particular from a CO2 sensor and/or a volatile organic compounds sensor, measuring the air quality within the confined space (CS), and
wherein the control unit is further configured to control components of the ventilation unit (1) based on the signals received from the sensor(s).

6. The ventilation unit (1) according to claim 4 or 5, wherein
the control unit is configured to receive and to process signals from a differential pressure sensor, and
wherein the control unit is further configured to control components of the ventilation unit (1) to provide a predetermined over-pressurization within the confined space (CS) with respect to the environment (E) of the confined space (CS).

7. The ventilation unit (1) according to any one of the preceding claims, wherein
the ventilation unit (1) comprises a housing (10) surrounding components of the ventilation unit (1) and the housing (10) being coupled to a base (20) of the ventilation unit (1),
wherein the base (20) is configured to attach the ventilation unit (1) to a desired location, and
wherein the housing (10) in particular is made of fiber reinforced material, preferably of hemp fiber reinforced polypropylene.

8. The ventilation unit (1) according to any one of the preceding claims, wherein
the ventilation unit (1) comprises sealing members and/or filtering units,
wherein the sealing members are configured to seal various components of the ventilation unit (1) against fluid ingress, and
wherein the filtering units are configured to filter in particular intake air within the intake air flow path (IFP).

9. Recreational vehicle, in particular a camper, caravan or a mobile home, comprising at least one ventilation unit (1) according to one of the preceding claims.

## Patentansprüche

1. Eine Belüftungseinheit (1), insbesondere für Freizeitfahrzeuge wie Wohnmobile, Wohnwagen oder Reisemobile, wobei die Belüftungseinheit (1) umfasst:
eine Luftansauganordnung (30), die konfiguriert ist, um in einem installierten Zustand der Belüftungseinheit (1) einen Ansaugluftströmungsweg (IFP) von der Umgebung (E) eines geschlossenen Raums (CS) in den geschlossenen Raum (CS) zu definieren;
eine Luftauslassanordnung (40), die konfiguriert ist, um in einem installierten Zustand der Belüftungseinheit (1) einen Auslassluftströmungsweg (EFP) von dem geschlossenen Raum (CS) zu der Umgebung (E) des geschlossenen Raums (CS) zu definieren;
wobei die Belüftungseinheit (1) eine passive Wärmeübertragungseinheit (60) umfasst, die konfiguriert ist, um eine passive Wärmeübertragung zwischen Ansaugluft innerhalb des Ansaugluftströmungswegs (IFP) und Auslassluft innerhalb des Auslassströmungswegs (EFP) durchzuführen; wobei
eine Trennwand (56) den Ansaugluftströmungsweg (IFP) und den Auslassströmungsweg (EFP) innerhalb eines internen Gehäuses (50), welches einen Temperaturaustauschraum innerhalb der Belüftungseinheit (1) definiert, voneinander abtrennt; wobei
die passive Wärmeübertragungseinheit (60) eine Wärmeübertragungsscheibe (62) und einen Drehmotor (64) umfasst; wobei
der Drehmotor (64) so mit der Wärmeübertragungsscheibe (62) gekoppelt ist, dass der Drehmotor (64) die Wärmeübertragungsscheibe (62) in Drehung versetzt; und wobei die Wärmeübertragungsscheibe (62) so konfiguriert ist, dass ein erster Abschnitt (62A) der Wärmeübertragungsscheibe (62) mit der Auslassströmungswegs-Seite des Temperaturaustauschraums innerhalb des internen Gehäuses (50) in Kontakt steht und ein zweiter Abschnitt (62B) der Wärmeübertragungsscheibe (62) mit der Ansaugluftströmungswegs-Seite des Temperaturaustauschraums innerhalb des internen Gehäuses (50) in Kontakt steht, so dass der erste Abschnitt (62A) mit Auslassluft, welche entlang des Auslassströmungswegs (EFP) strömt, in Kontakt steht und der zweite Abschnitt (62B) mit Ansaugluft, welche entlang des Ansaugluftströmungswegs (IFP) strömt, in Kontakt steht
**dadurch gekennzeichnet, dass**
die Wärmeübertragungsscheibe (62) eine perforierte Keramikscheibe ist; und
der Drehmotor (64) innerhalb eines in der Trennwand (56) ausgebildeten Raums angeordnet ist.

2. Die Belüftungseinheit (1) nach Anspruch 1, wobei
die Luftansauganordnung (30) eine Ansaug-Lüftereinheit (32), welche an dem internen Gehäuses (50) vorgesehen ist, umfasst, die konfiguriert ist, um einen Strom von Ansaugluft durch den Ansaugluftströmungsweg (IFP) zu zwingen; und/oder
die Luftauslassanordnung (40) eine Auslass-Lüftereinheit (42), welche an dem internen Gehäuse (50) vorgesehen ist, umfasst, die konfiguriert ist, um einen Strom von Auslassluft durch den Auslassluftströmungsweg (EFP) zu zwingen.

3. Die Belüftungseinheit (1) nach Anspruch 2, wobei
die Ansaug-Lüftereinheit (32) und/oder die Auslass-Lüftereinheit (42) einen Lüfter umfasst, der von einem Elektromotor mit Steuereingang angetrieben wird, insbesondere einem 12-Volt-Gleichstrommotor, der mit pulsweitenmodulierten Betriebssignalen betrieben wird; und/oder wobei der Drehmotor (64) ein 12-Volt-Gleichstrommotor ist, der mit pulsweitenmodulierten Betriebssignalen betrieben wird.

4. Die Belüftungseinheit (1) nach einem der Ansprüche 2 oder 3, wobei
die Belüftungseinheit (1) eine Steuereinheit mit einer Leiterplatte umfasst,
wobei die Steuereinheit so konfiguriert ist, dass sie den Betrieb der Ansaug-Lüftereinheit (32), der Auslass-Lüftereinheit (42) und/oder der Wärmeübertragungseinheit (60) steuert.

5. Die Belüftungseinheit (1) nach Anspruch 4, wobei
die Steuereinheit konfiguriert ist, um Signale von einem Gassensor, insbesondere von einem CO2-Sensor und/oder einem Sensor für flüchtige organische Verbindungen, welcher die Luftqualität innerhalb des geschlossenen Raums (CS) misst, zu empfangen und zu verarbeiten, und
wobei die Steuereinheit ferner konfiguriert ist, um Komponenten der Belüftungseinheit (1) auf der Grundlage der von den Sensoren empfangenen Signale zu steuern.

6. Die Belüftungseinheit (1) nach Anspruch 4 oder 5, wobei
die Steuereinheit konfiguriert ist, um Signale von einem Differenzdrucksensor zu empfangen und zu verarbeiten, und
wobei die Steuereinheit ferner konfiguriert ist, um Komponenten der Belüftungseinheit (1) so zu steuern, dass ein vorbestimmter Überdruck innerhalb des geschlossenen Raums (CS) in Bezug auf die Umgebung (E) des geschlossenen Raums (CS) erzeugt wird.

7. Die Belüftungseinheit (1) nach einem der vorhergehenden Ansprüche, wobei
die Belüftungseinheit (1) ein Gehäuse (10) umfasst, das Komponenten der Belüftungseinheit (1) umgibt, und das Gehäuse (10) mit einer Basis (20) der Belüftungseinheit (1) gekoppelt ist,
wobei die Basis (20) zur Befestigung der Belüftungseinheit (1) an einem gewünschten Ort ausgebildet ist, und
wobei das Gehäuse (10) insbesondere aus faserverstärktem Material, vorzugsweise aus hanffaserverstärktem Polypropylen, besteht.

8. Die Belüftungseinheit (1) nach einem der vorhergehenden Ansprüche, wobei
die Belüftungseinheit (1) Dichtungselemente und/oder Filtereinheiten umfasst,
wobei die Dichtungselemente so konfiguriert sind, dass sie verschiedene Komponenten der Belüftungseinheit (1) gegen das Eindringen von Flüssigkeit abdichten, und
wobei die Filtereinheiten so konfiguriert sind, dass sie insbesondere die Ansaugluft im Ansaugluftströmungsweg (IFP) filtern.

9. Freizeitfahrzeug, insbesondere ein Wohnmobil, Wohnwagen oder Reisemobil, mit mindestens einer Belüftungseinheit (1) nach einem der vorhergehenden Ansprüche.

## Revendications

1. Unité de ventilation (1), en particulier pour des véhicules récréatifs, tel que des camping-cars, des caravanes ou des mobile-homes,
ladite unité de ventilation (1) comprenant :
un ensemble d'insufflation d'air (30) configuré pour délimiter une voie d'écoulement d'air d'insufflation (IFP) depuis l'environnement (E) d'un espace confiné (CS) vers l'espace confiné (CS) dans un état installé de ladite unité de ventilation (1) ;
un ensemble d'extraction d'air (40) configuré pour délimiter une voie d'écoulement d'air d'extraction (EFP) depuis ledit espace confiné (CS) vers l'environnement (E) de l'espace confiné (CS) dans un état installé de ladite unité de ventilation (1) ;
ladite unité de ventilation (1) comprenant une unité de transfert de chaleur passif (60) configurée pour réaliser un transfert de chaleur passif entre l'air d'insufflation dans la voie d'écoulement d'air d'insufflation (IFP) et l'air d'extraction dans la voie d'écoulement d'air d'extraction (EFP) ;
une paroi de séparation (56) séparant, l'une de l'autre, la voie d'écoulement d'air d'insufflation (IFP) et la voie d'écoulement d'air d'extraction (EFP) à l'intérieur d'un boîtier interne (50) délimitant une espace d'échange de température à l'intérieur de ladite unité de ventilation (1) ;
ladite unité de transfert de chaleur passif (60) comprenant un disque de transfert de chaleur plat (62) ainsi qu'un moteur de rotation (64) ; ledit moteur de rotation (64) étant couplé au disque de transfert de chaleur (62) de façon que le moteur de rotation (64) est configuré pour faire tourner le disque de transfert de chaleur (62) ; et le disque de transfert de chaleur (62) étant configurée de façon qu'une première partie (62A) du disque de transfert de chaleur (62) est en contact avec le côté voie d'écoulement d'air d'extraction de l'espace d'échange de température à l'intérieur du boîtier interne (50) et une deuxième partie (62B) du disque de transfert de chaleur (62) est en contact avec le côté voie d'écoulement d'air d'insufflation de l'espace d'échange de température à l'intérieur du boîtier interne (50) de façon que la première partie (62A) est en contact avec l'air d'extraction s'écoulant à travers la voie d'écoulement d'air d'extraction (EFP) et la deuxième partie (62B) est en contact avec l'air d'insufflation s'écoulant à travers la voie d'écoulement d'air d'insufflation (IFP)
**caractérisée en ce que**
le disque de transfert de chaleur (62) est un disque en céramique perforé ; et
le moteur de rotation (64) est positionné à l'intérieur d'un espace qui est aménagé dans la paroi de séparation.

2. Unité de ventilation (1) selon la revendication 1, dans laquelle
ledit ensemble d'insufflation d'air (30) comprend une unité de ventilateur d'insufflation (32) prévue sur le boîtier interne (50) et configurée pour propulser un courant d'air d'insufflation à travers la voie d'écoulement d'air d'insufflation (IFP) ; et/ou
ledit ensemble d'extraction d'air (40) comprend une unité de ventilateur d'extraction (42) prévue sur le boîtier interne (50) et configurée pour propulser un courant d'air d'extraction à travers la voie d'écoulement d'air d'extraction (EFP).

3. Unité de ventilation (1) selon la revendication 2, dans laquelle
ladite unité de ventilateur d'insufflation (32) et/ou ladite unité de ventilateur d'extraction (42) comprend/ comprennent un ventilateur entraîné par un moteur électrique moyennant des entrées de commande, en particulier un moteur à courant continu de 12V commandé par des signaux de commande à modulation de largeur d'impulsion ; et/ou
ledit moteur de rotation (64) est un moteur à courant continu de 12V commandé par des signaux de commande à modulation de largeur d'impulsion.

4. Unité de ventilation (1) selon la revendication 2 ou 3, dans laquelle
ladite unité de ventilation (1) comprend une unité de commande comportant une carte de circuit imprimé,
ladite unité de commande étant configurée pour commander le fonctionnement de l'unité de ventilateur d'insufflation (32), de l'unité de ventilateur d'extraction (42) et/ou de l'unité de transfert de chaleur passif (60).

5. Unité de ventilation (1) selon la revendication 4, dans laquelle
ladite unité de commande est configurée pour recevoir et traiter des signaux provenant d'un capteur de gaz, en particulier d'un capteur de CO2 et/ou un capteur de composés organiques volatils, qui est destiné à mesurer la qualité de l'air à l'intérieur dudit espace confiné (CS), et ladite unité de commande est en outre configurée pour commander des composants de l'unité de ventilation (1) sur la base des signaux reçus du ou des capteurs.

6. Unité de ventilation (1) selon la revendication 4 ou 5, dans laquelle
ladite unité de commande est configurée pour recevoir et traiter des signaux provenant d'un capteur de pression différentielle, et
ladite unité de commande est en outre configurée pour commander des composants de l'unité de ventilation (1) pour fournir une surpression prédéterminée à l'intérieur dudit espace confiné (CS) par rapport à l'environnement (E) de l'espace confiné (CS).

7. Unité de ventilation (1) selon l'une quelconque des revendications précédentes, dans laquelle ladite unité de ventilation (1) comprend un boîtier (10) enveloppant des composants de l'unité de ventilation (1) et le boîtier (10) est connecté à une base (20) de l'unité de ventilation (1),
la base (20) est configurée pour fixer l'unité de ventilation (1) à un emplacement souhaité, et le boîtier (10) est en particulier constitué de matériau renforcé par des fibres, de préférence de polypropylène renforcé par des fibres de chanvre.

8. Unité de ventilation (1) selon l'une quelconque des revendications précédentes, dans laquelle ladite unité de ventilation (1) comprend des éléments d'étanchéité et/ou des unités de filtration, les éléments d'étanchéité étant configurés pour assurer l'étanchéité de divers composants de l'unité de ventilation (1) contre l'infiltration de fluide, et
les unités de filtration étant configurés pour filtrer en particulier l'air d'insufflation dans la voie d'écoulement d'air d'insufflation (IFP).

9. Véhicule récréatif, en particulier un camping-car, une caravane ou un mobile-home, comprenant au moins une unité de ventilation (1) selon l'une quelconque des revendications précédentes.
